# EUROPEAN PATENT SPECIFICATION

(11) **EP 2 234 193 B1**
(45) Date of publication and mention of the grant of the patent: **21.11.2012**
(21) Application number: 10157088.5
(22) Date of filing: 19.03.2010
(51) Int. Cl.: H01M 8/04

(54) **Fuel Cell System and Method of Driving the Same**
Brennstoffzellensystem und Betriebsverfahren
Système de pile à combustible et son procédé de commande

(30) Priority: 20.03.2009 KR 20090024090
(43) Date of publication of application: 29.09.2010
(73) Proprietor: Samsung SDI Co., Ltd., Gyeonggi-do (KR)
(72) Inventor: Lee, Chi-Seung, Gyeonggi-do (KR); Lee, Jin-Hwa, Gyeonggi-do (KR); An, Seong-Jin, Gyeonggi-do (KR); Park, Jun-Young, Gyeonggi-do (KR); Suh, Jun-Won, Gyeonggi-do (KR)
(74) Representative: Walaski, Jan Filip

(56) References cited:
- EP-A2- 1 442 493
- JP-A- 2008 027 834
- US-A1- 2004 033 399
- US-A1- 2006 159 969
- US-B1- 6 500 573

## Description

The present invention relates to a fuel cell system and a driving method thereof.

A fuel cell is a device that electrochemically generates electrical power by facilitating an electrochemical reaction between a fuel (hydrogen or reformed gas) and an oxidizer (oxygen or air). Generally, pure hydrogen or a fuel containing a large amount of hydrogen that is generated by reforming a hydrocarbon-based fuel such as liquefied natural gas (LNG), liquefied petroleum gas (LPG), and CH₃OH is used as the fuel and pure oxygen or air containing a large amount of oxygen is used as the oxidizer of the fuel cell.

One type of fuel cell is a polymer electrolyte membrane fuel cell ("PEMFC"). The PEMFC has relatively high density and relatively high energy conversion efficiency, and is operable at a relatively low temperature of 80°C or less. In addition, the PEMFC can be miniaturized and sealed and thus it has been widely used as a power source for a variety of applications such as for a pollution-free vehicle, home power equipment, mobile communication equipment, military equipment, medical equipment, and the like.

In one aspect, a fuel cell system is provided that can be normally driven in an initial driving stage of a fuel cell stack. In another aspect a method of driving the fuel cell system is provided.

In one aspect, a driving method of a fuel cell system includes sequentially supplying a humidified fuel and an oxidizer to a fuel cell stack; measuring the temperature of each of a plurality of unit cells in the fuel cell stack; detecting to detect a unit cell having the lowest temperature among the measured temperature of each of the plurality of unit cells; and decreasing humidification temperature of the fuel to be lower than the lowest temperature.

In some embodiments, the sequential supplying of the humidified fuel and the oxidizer may include supplying the oxidizer between about 30 seconds and about 2 minutes after supplying the humidified fuel. In some embodiments, the method further may include connecting the fuel cell stack and to a load. In some embodiments, the connecting the fuel cell stack to the load occurs when the voltage of the fuel cell stack reaches an open circuit voltage (OCV). In some embodiments, the method further may include detecting the rate of a temperature increase of the unit cell having the lowest temperature by measuring the temperature of the unit cell for a unit time. In some embodiments, the method further may include increasing the humidification temperature corresponding to the temperature increase rate.

In another aspect, a method of driving method of a fuel cell system includes supplying a humidified fuel and an oxidizer to a fuel cell stack, wherein the fuel cell stack forms part of a fuel cell system; measuring the temperature of each of a plurality of unit cells of the fuel cell stack to detect a unit cell having the lowest measured temperature among the plurality of unit cells; and decreasing humidification temperature of the fuel to be lower than the lowest measured temperature.

In some embodiments, the method further includes detecting a temperature increase speed of the unit cell having the lowest temperature by repeatedly measuring the temperature of the unit cell for each over a unit time. In some embodiments, the method further includes increasing the humidification temperature corresponding to the temperature increase speed.

In another aspect, a fuel cell system includes a fuel cell stack including a membrane electrode assembly ("MEA") and a plurality of unit cells; a fuel supply unit configured to supply a fuel to the fuel cell stack; an oxidizer supply unit configured to supply an oxidizer to the fuel cell stack; a humidifying unit configured to provide humidity to the fuel; and a controller.

In some embodiments, the controller is configured to control the fuel and the oxidizer to be sequentially supplied. In some embodiments, the controller is configured to lower the humidification temperature below the lowest measured temperature. In some embodiments, the MEA has a membrane, a cathode disposed at a first side of the membrane, and an anode disposed at a second side of the membrane. In some embodiments, each unit cell of the plurality of unit cells has a separator attached to the MEA. In some embodiments, the controller is configured to detect a unit cell among the plurality of unit cells having the lowest measured temperature by measuring the temperature of each of the plurality of unit cells. In some embodiments, the controller is configured to control a humidification temperature of the humidifying unit to be lower than the lowest temperature.

In some embodiments, the fuel cell stack can be normally driven in an initial driving stage.

Embodiments of the invention will now be described by way of example, with reference to the accompanying drawings, in which:
FIG. 1 is a schematic diagram of an entire configuration of a fuel cell system according to an exemplary embodiment.
FIG. 2 is a flowchart of a driving method of a fuel cell system according to a first exemplary embodiment.
FIG. 3 shows a temperature change A according to time of a unit cell having the lowest temperature among a plurality of unit cells of a fuel cell stack 50 and a humidification temperature change B of a humidifying unit 20.
FIG. 4 shows a voltage of a fuel cell stack, obtained by driving the fuel cell system according to the first exemplary embodiment.
FIG. 5 is a flowchart of a driving method of a fuel cell system according to a second exemplary embodiment.
FIG. 6 shows a voltage of a fuel cell stack, obtained by driving the fuel cell system according to the second exemplary embodiment.

In the following detailed description, only certain exemplary embodiments have been shown and described, simply by way of illustration. As those skilled in the art would realize, the described embodiments may be modified in various different ways, while still falling within the scope of the invention as defined by the claims. Accordingly, the drawings and description are to be regarded as illustrative in nature and not restrictive. Like reference numerals designate like elements throughout the specification.

Throughout this specification and the claims that follow, when it is described that an element is "coupled" to another element, the element may be "directly coupled" to the other element or "electrically coupled" to the other element through a third element. In addition, unless explicitly described to the contrary, the word "comprise" and variations such as "comprises" or "comprising" will be understood to imply the inclusion of stated elements but not the exclusion of any other elements.

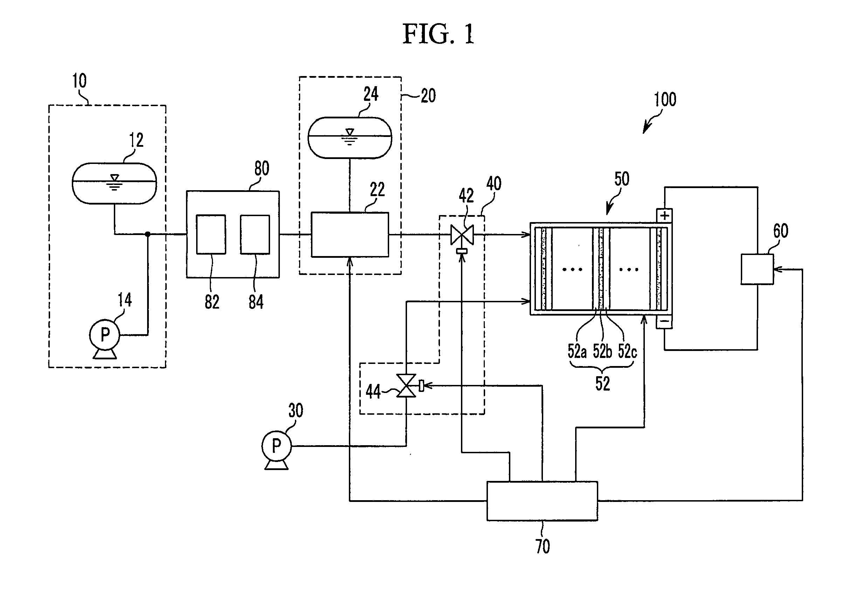

FIG. 1 is a schematic diagram of a fuel cell system 100 according to one exemplary embodiment. The fuel cell system 100 may employ a polymer electrolyte membrane fuel cell ("PEMFC") method in which hydrogen is generated by reforming a fuel to thereby generate electrical energy through electrochemical reaction between oxygen and the hydrogen. However, the present invention is not limited thereto. The fuel cell system may include, for example, a hydrogen-containing liquid or a gas fuel such as methanol, ethanol, liquefied petroleum gas ("LPG"), liquefied natural gas ("LNG"), gasoline, or butane gas. As in the fuel cell system 100 of FIG. 1, a fuel cell stack 50 may be configured to perform a direct oxidation fuel cell method in which electrical energy is generated through direct reaction between liquid or gas fuel with oxygen in a unit cell.

The fuel used for the fuel cell system 100 may be liquid or gaseous carbon-hydrogen fuel, for example methanol, ethanol, natural gas or LPG. In addition, the fuel cell system 100 may use oxygen gas stored in a storage unit or air as an oxidizer that reacts with hydrogen.

The fuel cell system 100 includes a fuel supply unit 10, a humidifying unit 20, an oxidizer supply unit 30, a supply amount controller 40, the fuel cell stack 50, a load 60 and a controller 70. The fuel supply unit 10 includes a fuel tank 12 and a fuel pump 14. The fuel tank 12 is configured to store liquid or gas fuel. The fuel pump 14 is connected to the fuel tank 12 and configured to emit the fuel stored in the fuel tank 12 by using a predetermined pumping force from the fuel tank 12.

The humidifying unit 20 includes a humidifier 22 and a water supply unit 24. The humidifier 22 is in fluid communication with the fuel tank 12 and configured to humidify the fuel emitted from the fuel tank 12. A humidification temperature of the humidifier 22 may be controlled by the controller 70. The water supply unit 24 is in fluid communication with the humidifier 22 and is configured to supply water to the humidifier 22.

The oxidizer supply unit 30 is configured to supply an oxidizer to the fuel cell stack 50. The oxidizer supply unit 30 includes an oxidizer pump. The oxidizer pump is configured to aspirate external air with a predetermined pumping force. The supply amount controller 40 includes a fuel control valve 42 and an oxidizer control valve 44. The fuel control valve 42 is in fluid communication with both the humidifying unit 20 and the fuel cell stack 50. The fuel control valve 42 is configured to supply humidified fuel to the fuel cell stack 50 and is configured to be controlled by the controller 70. In the embodiment illustrated in FIG. 1, the supply of the humidified fuel may be controlled according to a degree of openness of the fuel control valve 42.

The oxidizer control valve 44 is in fluid communication with both the oxidizer supply unit 30 and the fuel cell stack 50. The oxidizer control valve 44 is configured to supply the oxidizer to the fuel cell stack 50 and is configured to be controlled by the controller 70. Here, the oxidizer supply is controlled according to a degree of openness of the oxidizer control valve 44.

The fuel cell stack 50 may include a plurality of unit cells that generate electrical energy by facilitating and/or inducing an oxidation/reduction reaction between the fuel and the oxidizer. As one of the plurality of unit cells, a unit cell 52 includes a membrane electrode assembly ("MEA") 52b that oxidizes/reduces oxygen among the fuel and the oxidizer and separators (also referred to as bipolar plates) 52a and 52c for supplying the fuel and the oxidizer to the MEA 52b. The unit cell 52 has a structure in which the separators 52a and 52c are arranged, interposing the MEA 52b therebetween. The MEA 52b includes a membrane disposed in the center thereof, a cathode disposed at a first side of the membrane, and an anode disposed at a second side of the membrane. The cathode is supplied with the oxidizer and the anode is supplied with the fuel through the separators 52a and 52c. The fuel cell system 100 includes the fuel cell stack 50 with unit cells 52 arranged in series.

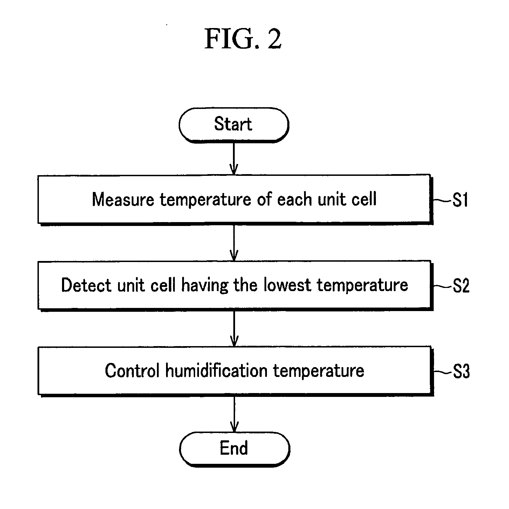

If the fuel cell stack 50 has not been driven for a long period of time or if the fuel cell stack 50 is relatively cold, the MEA 52b is in a "dried" state. Accordingly, conductivity of protons is decreased in an initial driving stage of the fuel cell stack 50. To prevent this, water may be included in the fuel when supplying the fuel to the fuel cell stack 50. However, when the temperature of the water is higher than the internal temperature of the fuel cell stack 50, the water condenses in the fuel cell stack 50. In particular, the water condensation may occur within a portion of the fuel cell stack 50 where a unit cell having the lowest temperature is located. In this case, the condensed water blocks the path of the fuel and the oxidizer so that the output voltage of the fuel cell stack 50 in the initial driving state is significantly reduced. Therefore, the temperature of the water included in the fuel should be controlled. To avoid a reduction in output voltage of the fuel cell stack 50 during the initial driving state, the temperature of each of a plurality of unit cells that form a fuel cell stack 50 is measured to detect a unit cell having the lowest temperature. Then the water temperature is controlled to be lower than the lowest temperature of the fuel cell stack 50 by controlling the humidifying unit 20. This process will be described in further detail below with reference to FIG. 2.

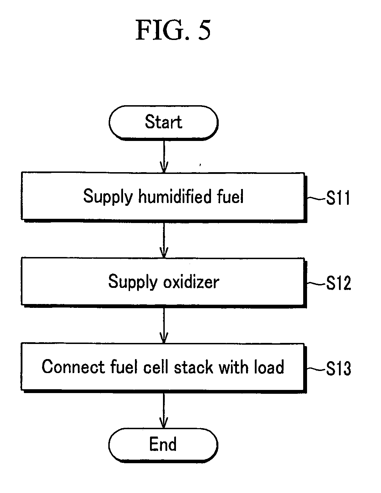

In general, a fuel and an oxidizer are simultaneously supplied to the fuel cell stack 50. However, when the MEA 52b is in the dried state and even though the fuel contains water, the output voltage of the fuel cell stack 50 may be significantly reduced in the initial driving stage if water supply is insufficient. To prevent this, a fuel containing water may be supplied prior to supplying oxidizer according to a second exemplary embodiment of the present disclosure. This will be described in further detail below with reference to FIG. 5.

In addition, the load 60 is electrically connected to a positive (+) terminal and a negative (-) terminal of the fuel cell stack 50, and consumes electrical energy generated from the fuel cell stack 50. The load 60 may be include various electrical devices such as a motor of a vehicle, an inverter that converts direct-current electricity to alternating-current electricity and/or an electrical heating device. The controller 70 may be configured to control operation of each of the humidifying unit 20, the supply amount controller 40, the fuel cell stack 50 and the load 60. In further detail, when the fuel cell system 100 is first being driven, the controller 70 may control the fuel control valve 42 to open first and then the oxidizer control valve 44 to open after a predetermined time has passed. In addition, the controller 70 may measure the temperature of each of the plurality of unit cells when the fuel cell system 100 is first driven. The controller 70 may be configured to detect a unit cell having the lowest temperature among the plurality of unit cells and may be configured to control the humidification temperature of the humidifying unit 20 to be lower than the detected temperature of the unit cell.

The fuel cell system 100 further includes a reformer 80. The reformer 80 is configured to generate a reformed gas using fuel between the fuel supply unit 10 and the humidifying unit 20. The reformer 80 may be configured to change liquid fuel to hydrogen gas for electricity generation of the fuel cell stack 50 through a reforming reaction. The reformer 80 may be configured to decrease concentration of carbon monoxide included in the hydrogen gas. In general, the reformer 80 includes a reforming unit 82 that generates hydrogen gas by reforming the liquid fuel and a carbon monoxide decreasing unit 84 configured to decrease concentration of the carbon monoxide in the hydrogen gas. The reforming unit 82 is configured to change the fuel to a reformed gas containing sufficient hydrogen through a catalytic reaction such as steam reforming, partial oxidation, and an exothermic reaction. In addition, the carbon monoxide decreasing unit 84 may be configured to decrease concentration of the carbon monoxide contained in the reformed gas using a catalytic reaction such as a water-gas shift reaction and selective oxidation, or hydrogen purification using a membrane. Although the reformer 80 in FIG. 1 is formed separate from the humidifying unit 20, the reformer 80 may include the humidifying unit 20.

FIG. 2 is a flowchart of a method of driving a fuel cell system. Referring to FIG. 2, the controller 70 controls the temperature of the humidifying unit 20 to be within a predetermined range before the fuel and the oxidizer may be supplied to the fuel cell stack 50. In this case, the temperature of the humidifying unit 20 is set to be lower than the temperature of the fuel cell stack 50 in consideration of the temperature of the fuel cell stack 50 in the driven state. Water heated to the predetermined temperature is mixed with the fuel and the subsequent mixture is supplied to the fuel cell stack 50. Here, the oxidizer is starting to be supplied to the fuel cell stack 50. Then, the temperature of the fuel cell stack 50 is gradually increased by reaction between the fuel and the oxidizer. In this case, the internal temperature of the fuel cell stack 50 is not uniform. That is, a temperature difference exists according to locations of the respective unit cells. Next, the controller 70 measures the temperature of each of the plurality of unit cells (S1). Subsequently, the controller 70 detects a unit cell having the lowest temperature among the plurality of unit cells (S2). Here, the controller 70 measures the temperature of the corresponding unit cell for each unit time to detect a temperature increase rate. Then, the controller 70 controls the temperature of the humidifying unit 20 to be lower than the temperature of the corresponding unit cell (S3). In this case, the controller 70 controls the temperature of the humidifying unit 20 to be increased corresponding to the rate of temperature increase of the corresponding unit cell. Accordingly, when humidified fuel enters into the fuel cell stack 50, water condensation at a location of the unit cell having the lowest temperature among the plurality of unit cells can be prevented.

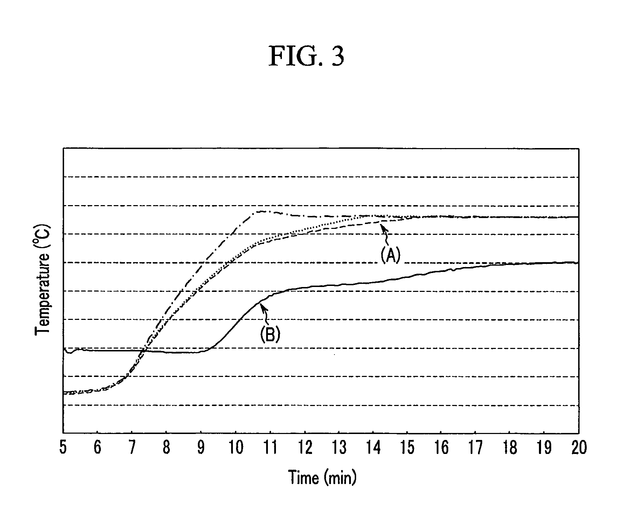

FIG. 3 shows a temperature change "A" according to time of the unit cell having the lowest temperature among the plurality of unit cells, and a humidification temperature change "B" of the humidifying unit 20 of the fuel cell stack 50. As shown in FIG. 3, the temperature of the unit cell having the lowest temperature is lower than the humidification temperature of the humidifying unit 20. In this case, the humidification temperature of the humidifying unit 20 is higher than the temperature of the unit cell having the lowest temperature during a predetermined time period in the initial driving stage. However, the water supplied during the predetermined time period is absorbed by the MEA 52b of the corresponding unit cell so that water condensation does not occur. Thus, blocking of the fuel path due to condensation of the humidified fuel in the fuel cell stack 50 can be prevented.

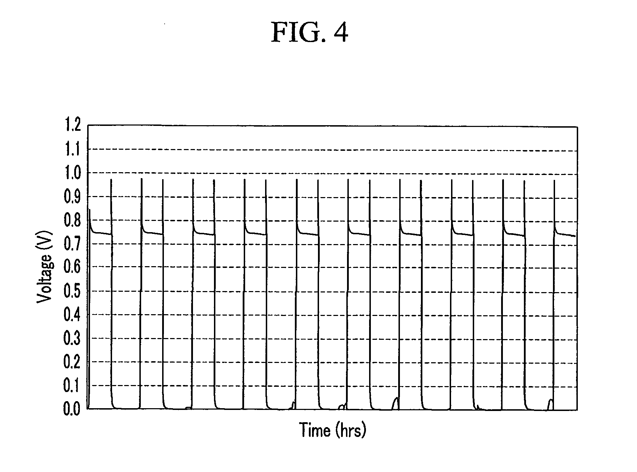

FIG. 4 is a graph showing a voltage of the fuel cell stack, obtained by driving the fuel cell system according to the first exemplary embodiment illustrated in FIG. 1. The graph shows a result obtained by driving the fuel cell stack 50 ten times. As shown in FIG. 4, according to the driving method of the fuel cell system of the first exemplary embodiment, a sudden voltage drop due to the water condensation does not occur.

FIG. 5 is a flowchart of a driving method of the fuel cell system according to a second exemplary embodiment. As shown in FIG. 5, the controller 70 opens the fuel control valve 42 and supplies humidified fuel to the fuel cell stack 50 (S11). In this case, the oxidizer control valve 44 is maintained in the closed state. That is, the fuel cell stack 50 starts to be driven in a state in which the humidified fuel is supplied in advance thereto and the MEA 52b absorbs water. Next, the controller 70 opens the oxidizer control valve 44 to supply an oxidizer when the humidified fuel is supplied to the fuel cell stack 50 for a predetermined time period (S12).
Here, the oxidizer control valve 44 is opened after about 30 seconds to about 2 minutes after opening the fuel control valve 42. However, methods and systems of the present invention are not limited thereto. For example, the opening time of the oxidizer control valve 44 may be changed according to parts of the fuel cell stack 50, a driving condition of the fuel cell stack 50 and/or the amount of fuel supplied to the fuel cell stack 50. When the oxidizer control valve 44 is opened and the predetermined time has passed, the controller 70 may connect the fuel cell stack 50 with a load 60 (S13). In this case, a connection time of the fuel cell stack 50 and the load 60 is a time at which the voltage of the fuel cell stack 50 reaches an open circuit voltage ("OCV"). For example, the fuel cell stack 50 and the load 60 are connected 10 to 20 seconds after the opening of the oxidizer control valve 44.

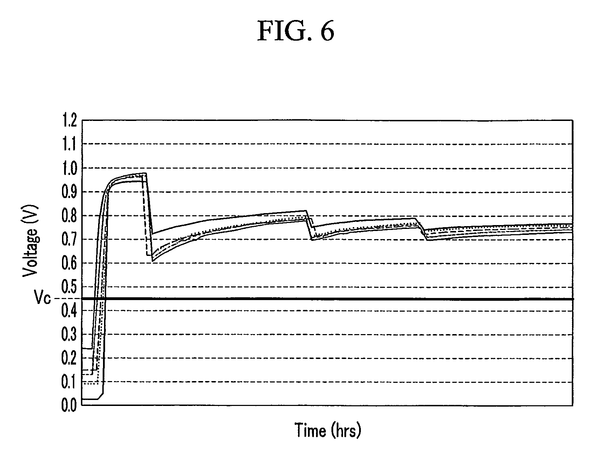

FIG. 6 is a graph showing a voltage of the fuel cell stack, obtained by driving the fuel cell system according to the second exemplary embodiment. The graph shows a result obtained by driving the fuel cell stack 50 five times. As shown in FIG. 6, according to the driving method of the fuel cell system of the second exemplary embodiment, the voltage of the fuel cell stack 50 may not be decreased lower than a reference voltage Vc. Here, the reference voltage Vc is a voltage that determines a failure of the fuel cell stack 50. Therefore, the fuel cell stack 50 is normally driven in an initial driving stage.

In addition, the second exemplary embodiment may include the structure of the first exemplary embodiment in which the unit cell having the lowest temperature and humidification temperature is controlled to be lower than the temperature of the detected unit.

It will be appreciated by those skilled in the art that various modifications and changes may be made without departing from the scope of the invention, as defined by the appended claims.

## Claims

1. A method of driving a fuel cell system in which a humidified fuel and an oxidizer are supplied to a fuel cell stack, the method comprising:
measuring the temperature of each of a plurality of unit cells in the fuel cell stack;
determining the unit cell having the lowest temperature;
controlling humidification temperature of the fuel to be lower than the lowest temperature; and
supplying the humidified fuel and the oxidizer to the fuel cell stack.

2. The method of driving a fuel cell system according to claim 1, comprising sequentially supplying the humidified fuel and the oxidizer to the fuel cell stack.

3. The method of driving a fuel cell system according to claim 2, wherein the sequential supplying of the humidified fuel and the oxidizer comprises supplying the oxidizer between about 30 seconds and about 2 minutes after supplying the humidified fuel.

4. The method of driving a fuel cell system according to claim 1, 2 or 3, further comprising connecting the fuel cell stack to a load.

5. The method of driving a fuel cell system according to claim 4, wherein connecting the fuel cell stack to the load occurs when voltage of the fuel cell stack reaches an open circuit voltage.

6. The method of driving a fuel cell system according to any one of the preceding claims, further comprising detecting a rate of temperature increase of the unit cell having the lowest temperature by measuring the temperature of the unit cell for a unit time.

7. The method of driving a fuel cell system according to 6, further comprising increasing the humidification temperature corresponding to the rate of temperature increase.

8. A fuel cell system, comprising:
a fuel cell stack;
a fuel supply unit configured to supply a fuel to the fuel cell stack;
an oxidizer supply unit configured to supply an oxidizer to the fuel cell stack;
a humidifying unit configured to provide humidity to the fuel; and
a controller configured to determine a unit cell among the plurality of unit cells having the lowest measured temperature and configured to control the humidifying unit so that the humidification temperature of the fuel is lower than the lowest temperature.

9. The fuel cell system according to claim 8, wherein the fuel cell stack includes a membrane electrode assembly ("MEA") and a plurality of unit cells, the MEA having a membrane, a cathode disposed at a first side of the membrane and an anode disposed at a second side of the membrane, and each unit cell of the plurality of unit cells has a separator attached to the MEA.

10. The fuel cell system according to claim 8 or 9, wherein the controller is configured to sequentially supply the fuel and the oxidizer.

11. The fuel cell system of any one of claims 8 to 10, wherein the controller is arranged to detect a rate of temperature increase of the unit cell having the lowest temperature by measuring the temperature of the unit cell for a unit time.

12. The fuel cell system according to claim 11, wherein the controller is arranged to increase the humidification temperature corresponding to the rate of temperature increase.

## Patentansprüche

1. Verfahren zum Betreiben eines Brennstoffzellensystems, in dem ein befeuchteter Brennstoff und ein Oxidationsmittel einem Brennstoffzellenstapel zugeführt werden, wobei das Verfahren umfasst:
Messen der Temperatur jeder einer Vielzahl von Zelleneinheiten in dem Brennstoffzellenstapel;
Bestimmen der Zelleneinheit mit der niedrigsten Temperatur;
Heruntersteuern der Befeuchtungstemperatur des Brennstoffs unter die niedrigste Temperatur; und
Zuführen des befeuchteten Brennstoffs und des Oxidationsmittels an den Brennstoffzellenstapel.

2. Verfahren zum Betreiben eines Brennstoffzellensystems nach Anspruch 1, umfassend sequentielles Zuführen des befeuchteten Brennstoffs und des Oxidationsmittels an den Brennstoffzellenstapel.

3. Verfahren zum Betreiben eines Brennstoffzellensystems nach Anspruch 2, wobei das sequentielle Zuführen des befeuchteten Brennstoffs und des Oxidationsmittels die Zufuhr des Oxidationsmittels zwischen ca. 30 Sekunden und ca. 2 Minuten nach der Zufuhr des befeuchteten Brennstoffs umfasst.

4. Verfahren zum Betreiben eines Brennstoffzellensystems nach Anspruch 1, 2 oder 3, ferner umfassend das Verbinden des Brennstoffzellenstapels mit einer Last.

5. Verfahren zum Betreiben eines Brennstoffzellensystems nach Anspruch 4, wobei das Verbinden des Brennstoffzellenstapels mit der Last erfolgt, wenn die Spannung des Brennstoffzellenstapels eine Leerlaufspannung erreicht.

6. Verfahren zum Betreiben eines Brennstoffzellensystems nach einem der vorstehenden Ansprüche, ferner umfassend das Ermitteln eines Betrages einer Temperaturerhöhung der Zelleneinheit mit der niedrigsten Temperatur durch Messen der Temperatur der Zelleneinheit in einer Zeiteinheit.

7. Verfahren zum Betreiben eines Brennstoffzellensystems nach Anspruch 6, ferner umfassend eine Erhöhung der Befeuchtungstemperatur entsprechend dem Betrag der Temperaturerhöhung.

8. Brennstoffzellensystem, umfassend:
einen Brennstoffzellenstapel;
eine Brennstoffzufuhreinheit, die zum Zuführen eines Brennstoffs an den Brennstoffzellenstapel ausgebildet ist;
eine Oxidationsmittelzufuhreinheit, die zum Zuführen eines Oxidationsmittels an den Brennstoffzellenstapel ausgebildet ist;
eine Befeuchtungseinheit, die zum Befeuchten des Brennstoffs ausgebildet ist; und
eine Steuerung, die zum Bestimmen einer Zelleneinheit aus der Vielzahl von Zelleneinheiten mit der niedrigsten gemessenen Temperatur ausgebildet ist sowie zum Steuern der Befeuchtungseinheit ausgebildet ist, so dass die Befeuchtungstemperatur des Brennstoffs niedriger als die niedrigste Temperatur ist.

9. Brennstoffzellensystem nach Anspruch 8, wobei der Brennstoffzellenstapel eine Membran-Elektroden-Einheit ("MEA") und eine Vielzahl von Zelleneinheiten umfasst, wobei die MEA eine Membran, eine auf einer ersten Seite der Membran angeordnete Kathode und eine auf einer zweiten Seite der Membran angeordnete Anode umfasst und jede Zelleneinheit der Vielzahl von Zelleneinheiten einen an der MEA angebrachten Separator aufweist.

10. Brennstoffzellensystem nach Anspruch 8 oder 9, wobei die Steuerung zum sequentiellen Zuführen des Brennstoffs und des Oxidationsmittels ausgebildet ist.

11. Brennstoffzellensystem nach einem der Ansprüche 8 bis 10, wobei die Steuerung zum Ermitteln eines Betrages einer Temperaturerhöhung der Zelleneinheit mit der niedrigsten Temperatur durch Messen der Temperatur der Zelleneinheit in einer Zeiteinheit ausgebildet ist.

12. Brennstoffzellensystem nach Anspruch 11, wobei die Steuerung zum Erhöhen der Befeuchtungstemperatur entsprechend dem Betrag der Temperaturerhöhung ausgebildet ist.

## Revendications

1. Procédé pour faire fonctionner un système de pile à combustible, dans lequel un combustible humidifié et un oxydant sont fournis à un empilement de pile à combustible, le procédé comprenant :
la mesure de la température de chacune d'une pluralité de piles unitaires dans l'empilement de pile à combustible ;
la détermination de la pile unitaire ayant la température la plus basse ;
la régulation de la température d'humidification du combustible de telle sorte qu'elle soit inférieure à la température la plus basse ; et
l'alimentation de l'empilement de pile à combustible avec le combustible humidifié et l'oxydant;

2. Procédé pour faire fonctionner un système de pile à combustible suivant la revendication 1, comprenant l'alimentation séquentielle de l'empilement de pile à combustible avec le combustible humidifié et l'oxydant.

3. Procédé pour faire fonctionner un système de pile à combustible suivant la revendication 2, dans lequel l'alimentation séquentielle avec le combustible humidifié et l'oxydant comprend la fourniture de l'oxydant environ 30 secondes à environ 2 minutes après la fourniture du combustible humidifié.

4. Procédé pour faire fonctionner un système de pile à combustible suivant la revendication 1, 2 ou 3, comprenant en outre la connexion de l'empilement de pile à combustible à une charge.

5. Procédé pour faire fonctionner un système de pile à combustible suivant la revendication 4, dans lequel la connexion de l'empilement de pile à combustible à la charge est effectuée lorsque la tension de l'empilement de pile à combustible atteint une tension de circuit ouvert.

6. Procédé pour faire fonctionner un système de pile à combustible suivant l'une quelconque des revendications précédentes, comprenant en outre la détection d'une vitesse d'élévation de température de la pile unitaire ayant la température la plus basse en mesurant la température de la pile unitaire pendant une unité de temps.

7. Procédé pour faire fonctionner un système de pile à combustible suivant la revendication 6, comprenant en outre l'élévation de la température d'humidification correspondant à la vitesse d'élévation de la température.

8. Système de pile à combustible, comprenant :
un empilement de pile à combustible ;
une unité d'alimentation en combustible configurée pour fournir un combustible à l'empilement de pile à combustible ;
une unité d'alimentation en oxydant configurée pour fournir un oxydant à l'empilement de pile à combustible ;
une unité d'humidification configurée pour fournir de l'humidité au combustible ; et
un système de commande configuré pour déterminer une pile unitaire dans la pluralité de piles unitaires ayant la température mesurée la plus basse et configuré pour commander l'unité d'humidification de telle sorte que la température d'humidification du combustible soit inférieure à la température la plus basse.

9. Système de pile à combustible suivant la revendication 8, dans lequel l'empilement de pile à combustible comprend un assemblage membrane-électrodes ("MEA"), une pluralité de piles unitaires, le MEA comportant une membrane, une cathode disposée d'un premier côté de la membrane et une anode disposée d'un second côté de la membrane, et chaque pile unitaire de la pluralité de piles unitaires comporte un séparateur fixé au MEA.

10. Système de pile à combustible suivant la revendication 8 ou 9, dans lequel le système de commande est configuré pour fournir de manière séquentielle le combustible et l'oxydant.

11. Système de pile à combustible suivant l'une quelconque des revendications 8 à 10, dans lequel le système de commande est conçu pour détecter une vitesse de température de la pile unitaire ayant la température la plus basse en mesurant la température de la pile unitaire pendant une unité de temps.

12. Système de pile à combustible suivant la revendication 11, dans lequel le système de commande est conçu pour élever la température d'humidification correspondant à la vitesse d'élévation de température.
